# EUROPÄISCHE PATENTSCHRIFT

(11) **EP 3 817 963 B1**
(45) Veröffentlichungstag und Bekanntmachung des Hinweises auf die Patenterteilung: **01.11.2023**
(21) Anmeldenummer: 19736629.7
(22) Anmeldetag: 28.06.2019
(51) Int. Cl.: B62D 1/181, B62D 1/185, B62D 1/183

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 04.07.2018 DE 102018211041
(43) Veröffentlichungstag der Anmeldung: 12.05.2021
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); KREUTZ, Daniel, 6800 Feldkirch (AT)
(74) Vertreter: thyssenkrupp Intellectual Property GmbH
(86) Internationale Anmeldenummer: PCT/EP2019/067278
(87) Internationale Veröffentlichungsnummer: WO 2020/007723

(56) Entgegenhaltungen:
- WO-A1-2017/140526
- US-A- 4 805 478

## Beschreibung

### Stand der Technik

Die Erfindung betrifft eine Lenksäule für ein Kraftfahrzeug, umfassend eine Manteleinheit, in der eine Lenkspindel um eine Längsachse drehbar gelagert ist und die mindestens zwei in Richtung der Längsachse um einen Verstellweg relativ zueinander verstellbar geführte Mantelrohre aufweist.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in einer Manteleinheit drehbar gelagert, mit der sie zusammen eine Stelleinheit bildet. Die Manteleinheit wird von einer an der Fahrzeugkarosserie befestigten Trageinheit gehalten. Verstellbare Lenksäulen ermöglichen durch eine Verstellung der Manteleinheit relativ zur Trageinheit die Einstellung der Lenkradposition relativ zur Fahrzeugkarosserie.

Es ist bekannt, die Lenksäule in Längsrichtung, d.h. in Achsrichtung der Lenkspindel bzw. in Richtung der Längsachse, verstellbar zu gestalten, um im manuellen Fahrbetrieb das Lenkrad in Bedienposition für einen bequemen manuellen Lenkeingriff an die Fahrerposition anzupassen, und im autonomen Fahrbetrieb, wenn kein manueller Lenkeingriff erfolgt, die Lenksäule längs zusammen zu schieben, um das Lenkrad in eine Verstauposition außerhalb der Bedienposition zu bringen, so dass der Fahrzeuginnenraum für eine anderweitige Nutzung freigegeben wird.

Zur Längsverstellung ist eine teleskopartige Anordnung von Mantelrohren bekannt, wie sie beispielsweise in der EP 2 808 225 A1 beschrieben ist. Diese umfasst ein in Fahrtrichtung vorn an der Karosserie abgestütztes, äußeres Mantelrohr, in das ein inneres Mantelrohr in Achsrichtung teleskopartig eintaucht. Zur Längsverstellung ist ein motorischer Verstellantrieb vorgesehen, der als in Achsrichtung wirkender Spindeltrieb an den Mantelrohren angreift. Aus der Verstauposition, in der die Mantelrohre in Achsrichtung so weit wie möglich ineinander eingefahren sind, kann die Lenksäule mittels des Verstellantriebs bis in eine fahrerseitige Endposition verstellt werden, in der die Mantelrohre so weit wie möglich auseinander ausgefahren sind. Der maximale mögliche Verstellbereich zwischen Verstauposition und Endposition definiert den Verstellweg der Lenksäule.

Im manuellen Fahrbetrieb wird die Lenksäule eingestellt, so dass sich das Lenkrad in einer individuellen Bedienposition in einem Bedienbereich befindet. Der Bedienbereich bezeichnet den Verstellbereich der im manuellen Fahrbetrieb zur Eingabe von Lenkbefehlen ergonomisch sinnvoll einstellbaren Bedienpositionen. Der Bedienbereich wird auch als Komfortbereich bezeichnet.

Lenksäulen für autonomen Fahrbetrieb haben einen großen Verstellweg, so dass die Verstauposition einen deutlichen Abstand von dem Bedienbereich hat, welcher sich von der maximal ausgefahrenen, fahrerseitigen Endposition lediglich über einen Teilbereich des Verstellwegs erstreckt.

Um eine hohe Steifigkeit und Eigenfrequenz der Lenksäule sowohl im Bedienbereich als auch in der Verstauposition zu gewährleisten, ist es im Stand der Technik bekannt, die teleskopierbaren Mantelrohre möglichst spielarm ineinander zu führen. In der genannten EP 2 808 225 A1 wird beispielsweise eine vorgespannte lineare Gleitlagerung vorgeschlagen. Dadurch kann eine hohe Steifigkeit über den gesamten Verstellweg realisiert werden. Die Vorspannung erzeugt jedoch auch hohe Reibungskräfte, die von dem Verstellantrieb beim Verstellen über den gesamten Verstellweg überwunden werden müssen. Um die relativ große Verstell- oder Übergangsdistanz zwischen Verstauposition und Bedienbereich beim Wechsel zwischen autonomen und manuellem Fahrbetrieb in akzeptabler Zeit zu überwinden, ist daher ein Verstellantrieb mit relativ großer Antriebsleistung erforderlich, der schwer ist, einen hohen Energiebedarf hat und eine aufwendige Ansteuerung erfordert.

In der DE 10 2015 216326 A1 wird ein Mehrfach-Teleskop mit mindestens einem zusätzlich eingefügten Zwischenmantelrohr beschrieben. Darin wird eine lineare Wälzlagerung mit Wälzkörpern vorgeschlagen, die zwischen den Mantelrohren in Längsrichtung abrollbar angebracht sind. Um die geforderte hohe Steifigkeit zu gewährleisten, ist zur Überwindung der Reibung jedoch ebenfalls ein leistungsstarker Verstellantrieb erforderlich.

Aus der WO 2017/140526 A1 ist eine gattungsgemäße Lenksäule mit einer umschaltbaren Friktionseinrichtung bekannt. Diese Friktionseinrichtung weist die Verstellkraft verändernde Mittel auf, die durch aktive Betätigung von außen während der Verstelloperation angepasst werden können, um eine verbesserte Verstellung zu ermöglichen. Die derart aktiv umschaltbare Friktionseinrichtung erfordert jedoch einen höheren Konstruktions- und Fertigungsaufwand als eine Lenksäule ohne Übergangs- und Komfortbereiche.

Angesichts der vorangehend erläuterten Problematik ist es eine Aufgabe der vorliegenden Erfindung, eine Lenksäule mit großem Verstellweg mit einem Komfortbereich und einem Übergangsbereich anzugeben, welche einfacher aufgebaut und einfacher herstellbar ist.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Erfindungsgemäß ist bei einer Lenksäule für ein Kraftfahrzeug, umfassend eine Manteleinheit, in der eine Lenkspindel um eine Längsachse drehbar gelagert ist und die mindestens zwei in Richtung der Längsachse (Achsrichtung) um einen Verstellweg relativ zueinander verstellbar geführte Mantelrohre aufweist, wobei die Mantelrohre relativ zueinander verstellbar sind, , wobei die Mantelrohre entlang des Verstellwegs relativ zueinander in mindestens einen Komfortbereich und mindestens einen Übergangsbereich bringbar sind, wobei eine Übergangsverstellkraft zur relativen Verstellung der Mantelrohre im Übergangsbereich geringer ist als eine Komfortverstellkraft zur relativen Verstellung der Mantelrohre im Komfortbereich, vorgesehen, dass keine die Verstellkraft erhöhenden oder verändernden Mittel vorgesehen sind, mit der die Komfortverstellkraft und/oder die Übergangsverstellkraft während der Verstelloperation anpassbar wäre.

Im Unterschied zum Stand der Technik sind die Übergangsverstellkraft und die Komfortverstellkraft erfindungsgemäß während der Verstelloperation unveränderbar. Mit anderen Worten sind bevorzugt keine die Verstellkraft erhöhenden oder verändernden Mittel vorgesehen, mit der die Komfortverstellkraft und/oder die Übergangsverstellkraft während der Verstelloperation anpassbar wären.

Bevorzugt sind sie Mantelrohre teleskopartig angeordnet und ineinander geführt, so dass sie zur Längenverstellung der Lenksäule teleskopierend ein- und ausfahrbar sind.

Der Verstellweg gibt den maximalen Teleskopweg an, nämlich den maximalen Verstellbereich in Richtung der Längsachse (Längsrichtung), um den die Lenksäule mittels des motorischen Verstellantriebs ein- und ausgefahren werden kann. Bei Lenksäulen für autonomes Fahren erstreckt sich der Verstellweg vom maximal nach vorn eingefahrenen Zustand in der Verstauposition bis zum maximal ausgefahrenen Zustand in der fahrerseitigen, hinteren Endposition.

In einer bevorzugten Weiterbildung ist ein motorischer Verstellantrieb vorgesehen, der mit den Mantelrohren gekoppelt ist, um die Mantelrohre relativ zueinander zu verstellen. Die Verstellung der Mantelrohre zueinander kann somit motorisch erfolgen. Der Verstellantrieb kann beispielsweise einen Spindeltrieb umfassen, bei dem eine Spindelmutter und eine darin eingeschraubte Gewindespindel relativ zueinander motorisch drehend antreibbar sind, wodurch eine Relativbewegung in Achsrichtung der Gewindespindel bewirkt wird. Die Spindelmutter und die Gewindespindel greifen an den Mantelrohren an, wodurch diese axial relativ zueinander bewegbar sind.

Die Erfindung sieht vor, dass durch die Ausgestaltung der Teleskopanordnung innerhalb des Verstellwegs Teilabschnitte ausgebildet sind, in denen die zur Verstellung erforderliche Verstellkraft reduziert ist. Konkret wird unterschieden zwischen mindestens einem Komfortbereich, auch als Komfortverstellpositionsbereich bezeichnet, und mindestens einem Übergangsbereich, auch als Übergangsverstellpositionsbereich bezeichnet. Durch Komfort- und Übergangsbereich werden entsprechend mögliche relative Verstellzustände der Mantelrohre definiert. Ein Komfortbereich definiert einen Bereich möglicher Verstellpositionen, die als funktionale Betriebspositionen im Betrieb zumindest zeitweise statisch eingestellt werden können. In diesen Betriebspositionen ist eine hohe Steifigkeit und Eigenfrequenz der Lenksäule gefordert, beispielsweise in einer Bedienposition im Bedienbereich, oder in der Verstauposition. Ein Übergangsbereich definiert einen außerhalb des oder der Komfortbereiche liegenden Verstellbereich, der innerhalb des Verstellwegs durchlaufen werden muss, um die Lenksäule in einen Komfortbereich zu verstellen. Im Übergangsbereich befindet sich keine definierte Betriebsposition, es erfolgt lediglich eine relative Bewegung der Mantelrohre zum Ein- oder Ausfahren.

Innerhalb des oder der Komfortbereiche können die Mantelrohre mit geringen Toleranzen, spielarm oder spielfrei ineinander geführt sein, so dass eine hohe Steifigkeit und Eigenfrequenz gewährleistet ist, wodurch eine relativ höhere Verstellkraft erforderlich ist, die als Komfortverstellkraft bezeichnet wird. Diese kann sich in der Größe der im Stand der Technik über den gesamten Verstellweg erforderlichen Verstellkraft bewegen. Im Übergangsbereich sind die Anforderungen hinsichtlich Steifigkeit und Eigenfrequenz geringer, und die teleskopierende Führung kann erfindungsgemäß leichtgängiger ausgestaltet sein, beispielsweise durch größeres Spiel oder verringerte Reibungskräfte zwischen den Mantelrohren. Dadurch ist die Verstellkraft bei einer erfindungsgemäßen Lenksäule im Übergangsbereich, die als Übergangsverstellkraft bezeichnet wird, kleiner als die Komfortverstellkraft.

Bei einer manuellen Verstellung, d.h. bei einer Ausführungsform, bei der kein motorischer Verstellantrieb vorgesehen ist, kann dank des im Komfortbereichs höheren Komfortverstellkraft die Einstellung durch den Fahrzeugführer exakt vorgenommen werden, da durch die erfindungsgemäß gegenüber der Übergangsverstellkraft erhöhte Komfortverstellkraft eine feinfühlige Einstellung der gewünschten Position möglich ist.

Ein besonderer Vorteil ist, dass durch einen Verstellantrieb mit gegebener Antriebsleistung im leichtgängigen Übergangsbereich eine relativ hohe Verstellgeschwindigkeit realisiert werden kann, die höher ist als in einem Komfortbereich. Dadurch kann die Lenksäule schneller und mit geringerem Energieverbrauch zwischen der Verstauposition und einer Bedienposition verstellt werden. Dies ist insbesondere vorteilhaft für Lenksäulen mit langem Verstellweg, wie sie beim autonomen Fahren eingesetzt werden, und bei denen sich die Komfortbereiche, die sich bevorzugt im Bereich der Verstauposition und im Bedienbereich befinden, in Achsrichtung über einen relativ kleinen Teilbereich des Verstellwegs erstrecken. Der dadurch bedingt relativ lange Übergangsbereich kann entsprechend schnell durchlaufen werden, wodurch ein schneller Wechsel zwischen autonomem und manuellem Fahrbetrieb ermöglicht wird.

Unter der Achsrichtung oder der Längsrichtung ist die Richtung der Längsachse zu verstehen, wobei die Begriffe gleichbedeutend verwendet werden.

Im Komfortbereich, beispielsweise im Bedienbereich der Lenksäule, sind in der Regel nur kleinere Verstellungen erforderlich, beispielsweise zur Feineinstellung einer individuellen Lenkradposition, so dass dort die Verstellung ohne Nachteil mit kleinerer Verstellgeschwindigkeit erfolgen kann.

Um eine vorgegebene mittlere Verstellgeschwindigkeit über den Verstellweg zu erreichen, kann ein verglichen mit dem Stand der Technik kleiner dimensionierter Verstellantrieb eingesetzt werden. Dadurch können das Gewicht und der erforderliche Bauraum, der Energieverbrauch und der Steuerungsaufwand reduziert werden.

Bevorzugt können mindestens ein erster Komfortbereich im Bereich maximal ineinander eingefahrener Mantelrohre, und mindestens ein zweiter Komfortbereich im Bereich maximal auseinander ausgefahrener Mantelrohre ausgebildet sein, wobei mindestens ein Übergangsbereich zwischen den ersten und zweiten Komfortbereich ausgebildet ist. In dem ersten Komfortbereich befindet sich die Verstauposition, in der die Lenksäule im autonomen Fahrbetrieb möglichst sicher, spielarm und vibrationsarm gehalten wird. Der zweite Komfortbereich erstreckt sich über den Bedienbereich, wo die ausgeübten Lenk- und Quermomente sicher von der Manteleinheit abgestützt werden müssen, und für die Verbindung der Mantelrohre eine entsprechend hohe Steifigkeit gefordert ist. Der Übergangsbereich wird lediglich kurzzeitig beim Verstellen zwischen der Verstau- und Bedienposition dynamisch durchfahren, wobei die Anforderungen an Steifigkeit und Resonanzfrequenz geringer sind als in den Verstau- und Bedienpositionen.

Es kann vorgesehen sein, dass in einem Übergangsbereich in größeres Spiel zwischen den Mantelrohren ausgebildet ist als in einem Komfortbereich. Das radiale Spiel zwischen den Mantelrohren bestimmt die Reibungskraft bei einer teleskopierenden Verstellung, die von dem Verstellantrieb überwunden werden muss. Im Komfortbereich kann eine spielarme oder spielfreie Linearpassung zwischen den Mantelrohren realisiert sein, die für eine hohe Steifigkeit sorgt. Im Übergangsbereich kann die Linearpassung größeres Spiel haben, wodurch die bei einer teleskopierenden Verstellung in Achsrichtung wirkende Reibungskraft verringert wird.

Alternativ ist es denkbar und möglich, die bei der teleskopierenden Verstellung relativ zueinander bewegten, gegeneinander gerichteten Flächen im Übergangs- und Komfortbereich unterschiedlich auszugestalten, so dass unterschiedliche Reibungskräfte erzeugt werden, beispielsweise durch unterschiedliche Oberflächenstrukturen, Materialien, lokale elastische Verformungen oder dergleichen.

Eine Ausführung der Erfindung kann vorsehen, dass ein äußeres Mantelrohr (Außenmantelrohr) einen inneren Lagerabschnitt aufweist, der sich in Achsrichtung über einen Teil des Verstellwegs erstreckt, und einen inneren Führungsabschnitt, der sich in Achsrichtung über einen Teil des Verstellwegs erstreckt und einen größeren Innenquerschnitt hat als der innere Lagerabschnitt, und ein in dem äußeren Mantelrohr aufgenommenes inneres Mantelrohr (Innenmantelrohr) einen äußeren Lagerabschnitt aufweist, der sich in Achsrichtung über einen Teil des Verstellwegs erstreckt, und einen äußeren Führungsabschnitt, der sich in Achsrichtung über einen Teil des Verstellwegs erstreckt und einen kleineren Außenquerschnitt hat als der äußere Lagerabschnitt, wobei der äußere Lagerabschnitt in dem inneren Lagerabschnitt positionierbar ist.

In der Funktion als äußeres Mantelrohr oder Außenmantelrohr wird in dem Innenquerschnitt ein inneres Mantelrohr oder Innenmantelrohr in Achsrichtung teleskopartig verschiebbar aufgenommen. Entsprechend weist ein Zweifach-Teleskop lediglich jeweils ein Außen- und Innenmantelrohr auf, und bei einem Mehrfach-Teleskop fungiert ein dazwischen eingefügtes Zwischenmantelrohr jeweils gleichzeitig als Außen- und Innenmantelrohr.

Werden ein Außen- und ein Innenmantelrohr durch Ein- oder Ausfahren telekopierend relativ zueinander bewegt, werden die inneren und äußeren Lager- und Führungsabschnitte in Achsrichtung relativ zueinander bewegt und abhängig vom relativen Verstellzustand der Mantelrohre in koaxiale Anordnung gebracht. Dabei können prinzipiell zwei Zustände auftreten, von denen der eine den Komfortbereich definiert, in dem der äußere Lagerabschnitt sich zumindest teilweise in dem inneren Lagerabschnitt befindet, und der andere den Übergangsbereich, in dem der äußere und innere Lagerabschnitt Abstand in Achsrichtung haben, d. g. sich die Lagerabschnitte des einen Mantelrohrs im Bereich der Führungsabschnitte des jeweils anderen Mantelrohrs befinden.

Hinsichtlich Form und Abmessungen sind der äußere und innere Lagerabschnitt so aneinander angepasst, dass sie ein spielarme oder spielfreie Linearpassung in Achsrichtung bilden, wobei das Lagerspiel quer zur Längsachse entsprechend gering ist. In dem dadurch gebildeten Komfortbereich wird eine Linearlagerung mit einer hohen Steifigkeit und Eigenfrequenz der Mantelrohranordnung erzeugt, in dem die erforderliche Verstellkraft, die vorangehend als Komfortverstellkraft eingeführt wurde, entsprechend hoch ist.

Werden die Mantelrohre durch relative Verstellung aus dem Komfortbereich heraus bewegt, so dass die Lagerabschnitte in Achsrichtung voneinander getrennt werden, befindet sich das Innenmantelrohr mit seinem äußeren Lagerabschnitt in dem inneren Führungsabschnitt des Außenmantelrohrs und mit seinem äußeren Führungsabschnitt in dem inneren Lagerabschnitt des Außenmantelrohrs. Dadurch kommen die Mantelrohre in einen Übergangsbereich, in dem sie zur Längsverstellung linear geführt werden, wobei zwischen den koaxial zueinander angeordneten Lager- und Führungsabschnitten ein größeres Spiel besteht, nämlich das sogenannte Führungsspiel, als im Komfortbereich zwischen den Lagerabschnitten. Dadurch ist die erforderliche Verstellkraft im Übergangsbereich, die als Übergangsverstellkraft bezeichnet wird, geringer als die Komfortverstellkraft.

Durch die in Achsrichtung abwechselnde Ausbildung von Lager- und Führungsabschnitten wird die Mantelrohranordnung bei einer Verstellung längs des Verstellwegs in Abhängigkeit vom jeweiligen Verstellzustand selbsttätig in einen Komfort- oder Übergangsbereich gebracht. Das äußerste Mantelrohr einer Teleskopanordnung weist lediglich innere Lager- und Führungsabschnitte auf, das innerste Mantelrohr einer Teleskopanordnung weist lediglich äußere Lager- und Führungsabschnitte auf, und ein in einem Mehrfach-Teleskop dazwischen eingefügtes Zwischenmantelrohr weist innere und äußere Lager- und Führungsabschnitte auf.

Bevorzugt weist ein Mantelrohr in seinen beiden Endabschnitten jeweils einen inneren und/oder äußeren Lagerabschnitt auf, zwischen denen sich ein innerer und/oder äußerer Führungsabschnitt erstreckt. Durch diese Anordnung werden in den Endbereichen, wenn die Mantelrohre maximal ein- oder ausgefahren sind, Komfortbereiche realisiert. Diese Konfiguration korrespondiert mit den vorangehend erläuterten Anforderungen an eine Lenksäule für autonomes Fahren, bei der in der Verstauposition die Mantelrohre maximal ineinander eingefahren sind, und der Bedienbereich sich im Endbereich des maximalen Auszugs befindet. In der Verstauposition sind die Lagerabschnitte beider Endbereiche koaxial ineinander angeordnet. Im Bedienbereich befindet sich der bezogen auf die Fahrtrichtung vordere Lagerabschnitt des fahrerseitigen, hinteren Mantelrohrs mit dem hinteren Lagerabschnitt des vorderen, fahrzeugseitigen Mantelrohrs im dem spielarmen Lagereingriff des Komfortbereichs. Ein Vorteil dieser Ausführung ist, dass durch das Verstellen der Lenksäule mittels des Verstellantriebs die Komfort- und Übergangsbereiche selbsttätig mechanisch im Bereich der Verstauposition und des Bedienbereichs eingenommen werden.

Es kann vorgesehen sein, dass an einem Mantelrohr ein in den Querschnitt zwischen den Mantelrohren vorstehendes Lagerelement ausgebildet ist. Ein Lagerelement kann im Innenquerschnitt eines Mantelrohrs angebracht sein, und einen kleineren Innenquerschnitt haben als das Mantelrohr, wodurch es einen inneren Lagerabschnitt bildet. Wird ein Lagerelement welches einen größeren Außenquerschnitt hat als das Mantelrohr, außen auf dem Mantelrohrs angebracht, kann es einen äußeren Lagerabschnitt bilden. Wie vorangehend erläutert, kann ein Komfortbereich dadurch eingestellt werden, dass die durch die Lagerelemente gebildeten Lagerabschnitte in Achsrichtung in Deckung gebracht werden, und ein Übergangsbereich durch axialen Abstand der Lagerelemente.

Das Lagerelement kann ein Gleitelement aufweisen, bevorzugt eine Gleithülse, die mit einem Mantelrohr in Achsrichtung fest verbunden ist. Eine im Querschnitt über den Umfang durchgehende Gleithülse, oder auch ein oder mehrere über den Umfang segmentförmig verteilte Gleitelemente können als äußere Gleithülse außen auf einem Innenmantelrohr oder als innere Gleithülse innen in einem Außenmantelrohr zur Bildung eines Lagerabschnitts angebracht sein. Miteinander korrespondierende innere und äußere Gleithülsen sind aneinander angepasst, so dass eine innere Gleithülse spielarm oder spielfrei in Achsrichtung in einer äu-ßeren Gleithülse gleiten kann. Eine Gleithülse kann rohrabschnittförmig ausgebildet und dabei an den Querschnitt der Mantelrohre angepasst sein, die einen runden, unrunden oder mehreckigen, beispielsweise vier-, sechs- oder achteckigen Querschnitt haben können. Alternativ kann die bevorzugt aus einem Kunststoff ausgebildete Gleithülse auch direkt auf das entsprechende Mantelroh aufgespritzt sein, beispielsweise durch Kunststoff-Spritzgießen.

Die Gleitelemente können reibungsmindernd ausgestaltet sein, beispielsweise durch eine Gleitbeschichtung der Oberfläche, oder durch Ausbildung aus einem gut gleitfähigen Material, wie Kunstoffen, etwa PTFE (Polytetrafluorethylen), oder einem Bunt- oder Lagermetall. Dadurch kann durch die Gleitelemente im Komfortbereich eine trotz geringen Spiels relativ leicht verstellbare Teleskoplagerung realisiert werden. Außerhalb des Komfortbereichs haben die Gleitelemente in einem Führungsabschnitt zu den Innen- und Außenmantelflächen der Mantelrohre ein radiales Führungsspiel, welches größer ist als das Lagerspiel zwischen den Gleitelementen im Komfortbereich.

Es kann vorgesehen sein, dass das Lagerelement zumindest einen Rollkörper aufweist, der in einem Mantelrohr um eine Rollachse drehbar gelagert ist. In einem Lagerabschnitt können ein, bevorzugt mehrere Rollkörper, beispielsweise Rollen, Nadelrollen oder dergleichen, in einem Mantelrohr jeweils um eine quer zur Längsachse liegende Rollachse drehbar gelagert sein, die in Achsrichtung relativ zum Mantelrohr fixiert ist. Der Rollkörper von dem einen Mantelrohr radial nach innen oder außen vor, und ist so bemessen, dass er an einem anderen Mantelrohr in Achsrichtung außen oder innen in Achsrichtung abrollbar ist. Beispielsweise können im äußeren Lagerabschnitt eines Innenmantelrohrs nach außen vorstehende Rollen gelagert sein, die im Komfortbereich spielarm oder spielfrei innen in einem Lagerabschnitt eines Außenmantelrohrs abrollen können, und die im Übergangsbereich spielhaltig durch einen im Querschnitt größeren Führungsbereich des Außenmantelrohrs entlangbewegt werden können. Dadurch wird eine lineare Wälzlagerung gebildet, die im Komfortbereich eine hohe Steifigkeit erzeugt, und leichtgängig durch den Übergangsbereich bewegbar ist.

Bevorzugt sind die Rollkörper in einer oder mehreren achsparallelen ersten Reihen angeordnet. Die Reihen können in Umfangsrichtung verteilt, bevorzugt gleichmäßig verteilt auf einem Mantelrohr angeordnet sein. Sind in einer Mehrfach-Teleskopanordnung drei oder mehr Mantelrohre ineinander angeordnet, ist es vorteilhaft, dass zwischen koaxial benachbarten Mantelrohren die Rollkörper in Umfangsrichtung versetzt zueinander, auf Lücke angeordnet sind.

Es ist möglich, dass die Lenkspindel mit einem Feedback-Aktuator gekoppelt ist. Ein Feedback-Aktuator dient bei einem mechanisch nicht gekoppelten steer-by-wire-Lenksystem dazu, dem Fahrer über das Lenkrad eine haptische Rückmeldung abhängig von der Fahrsituation zu geben, zur Vermittlung eines Lenkgefühls ähnlich wie bei konventionellen mechanisch gekoppelten Lenkungen. Ein Feedback-Aktuator weist hierzu eine Aktuatoreinheit auf, die einen als Handmoment- oder Lenkradsteller dienenden Verstellantrieb umfasst, und die abhängig von einem Rückkopplungs-Signal ein dem realen Reaktionsmoment entsprechendes Rückstellmoment (Feedbackmoment) über die Lenkwelle in das Lenkrad einkoppelt. Derartige "Force-feedback"-Systeme geben dem Fahrer den Eindruck einer realen Fahrsituation wie bei einer konventionellen Lenkung, was eine intuitive Reaktion erleichtert.

Bei einer manuellen Verstellung der Mantelrohre zueinander kann eine Fixiereinrichtung vorgesehen sein, die zwischen einer Freigabestellung, in der die Mantelrohre zueinander verstellbar sind, und einer Fixierstellung, in der die Mantelrohre zueinander festgelegt sind, umschaltbar ist. In einer vorteilhaften Weiterbildung kann diese Fixiereinrichtung einen Bedienhebel umfassen, der mit einer ersten Hubscheibe verbunden ist, die mit einer zweiten Hubscheibe zusammenwirkt und gegenüber dieser zweiten Hubscheibe mittels des Bedienhebels verdrehbar ist zur Bereitstellung eines Klemmhubs, wodurch die Mantelrohre zueinander festgesetzt werden können (Fixierstellung). Somit kann mittels des Bedienhebels die Fixiereinrichtung durch die Verdrehung des Bedienhebels zwischen der Freigabestellung und der Fixierstellung umgeschaltet werden.

Alternativ kann ein motorischer Verstellantrieb vorgesehen ist, der mit den Mantelrohren gekoppelt ist, um die Mantelrohre relativ zueinander zu verstellen.

Mit dem Innenmantelrohr und dem Außenmantelrohr ist der motorische Verstellantrieb verbunden, von dem das Innenmantelrohr relativ zum Außenmantelrohr in Achsrichtung ein- und ausfahrbar ist. Der Verstellantrieb kann einen Spindeltrieb umfassen, mit einer auf einer Gewindespindel angeordneten Spindelmutter, und einem Antriebsmotor, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Mantelrohr, dem Innen- oder Außenmantelrohr, in Richtung der Längsachse unverschieblich angebracht, und die Gewindespindel an dem dazu teleskopierbaren anderen Mantelrohr, dem Außen- oder Innenmantelrohr. Von einem elektrischen Stellmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindellängsachse bewegt wird, und je nach relativer Drehrichtung das Innenmantelrohr relativ zum Außenmantelrohr in Achsrichtung ein- oder ausfährt.

Die Manteleinheit bildet mit der darin gelagerten Lenkspindel eine Stelleinheit. Die Stelleinheit kann in einer mit einer Fahrzeugkarosserie verbindbaren Trageinheit gehalten sein. Dabei kann vorgesehen sein, dass die Stelleinheit an der Trageinheit um eine quer zur Längsachse liegende Schwenkachse höhenverschwenkbar gelagert ist. Durch die Verschwenkung um eine derartige horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die Höhenverstellung kann manuell erfolgen. Insbesondere zum automatisierten Verstauen der Lenksäule beim autonomen Fahren ist es vorteilhaft, dass ein elektrischer Höhen-Verstellantrieb mit der Trageinheit und der Stelleinheit verbunden ist, von dem die Stelleinheit relativ zur Trageinheit um die Schwenkachse bewegbar ist. Der Höhen-Verstellantrieb ist an sich ebenfalls bekannt und kann beispielsweise als elektromotorisch angetriebener Spindeltrieb realisiert werden, wie vorangehend für die Längsverstellung beschrieben.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer schematischen teilweise geöffneten Innenansicht,
- Figur 3: die Lenksäule gemäß Figur 1 in einer weiteren schematischen teilweise geöffneten Innenansicht,
- Figur 4: einen Längsschnitt durch die Lenksäule gemäß Figur 1,
- Figur 5: eine vergrößerte Detailansicht von Figur 4,
- Figur 6: ein Querschnitt A-A durch die Lenksäule gemäß Figur 4,
- Figur 7: einen Längsschnitt durch eine zweite Ausführungsform einer erfindungsgemäßen Lenksäule,
- Figur 8: eine vergrößerte Detailansicht von Figur 7,
- Figur 9: eine schematische Detailansicht von Figur 7 der Lenksäule in einem ersten Komfortbereich im Bedienbereich,
- Figur 10: eine schematische Detailansicht von Figur 7 der Lenksäule in einem Übergangsbereich,
- Figur 11: eine schematische Detailansicht von Figur 7 der Lenksäule in einem ersten Komfortbereich in Verstauposition,
- Figur 12: eine schematische Schnittansicht der Lenksäule gemäß Figur 7,
- Figur 13: jeweils ein Verstellkraft-Weg-, ein Geschwindigkeits-Weg- und ein Reibungskraft-Weg-Diagramm einer erfindungsgemäßen Lenksäule,
- Figur 14: eine schematische Detailansicht einer manuell verstellbaren Lenksäule in einem ersten Komfortbereich im Bedienbereich.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

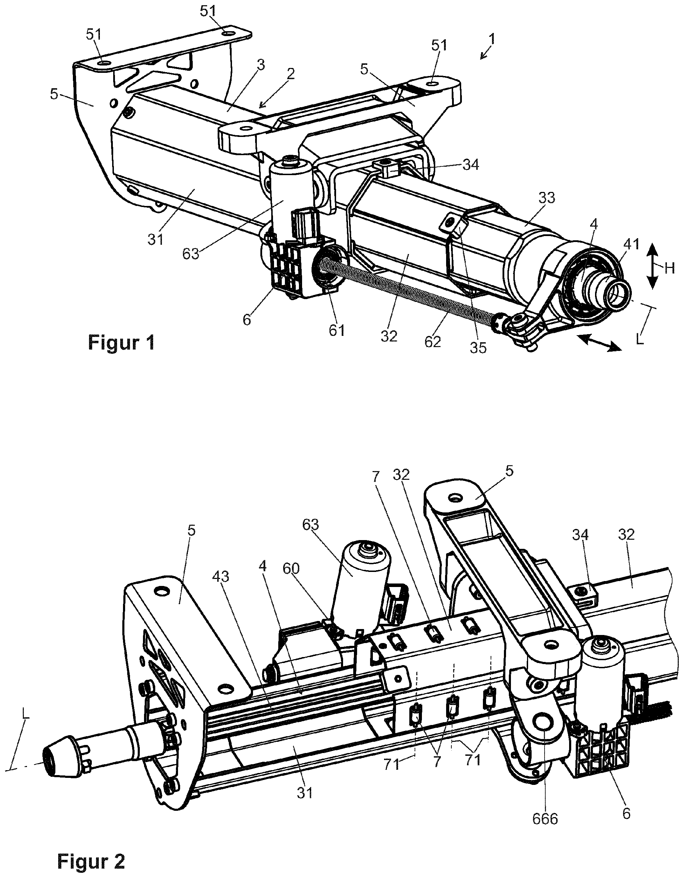

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind in Achsrichtung einer Längsachse L teleskopierend verschiebbar, koaxial ineinander angeordnet, wie mit einem Doppelpfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung, die der Achsrichtung der Längsachse L entspricht, an dem Außenmantelrohr 31 ab, wobei das Außenmantelrohr 31 einen Gabelabschnitt aufweist, und wobei der Verstellantrieb 6 unter Zwischenschaltung eines dämpfenden als Silentbuchse ausgebildeten Gummielements 666 mit dem Gabelabschnitt gekoppelt ist. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn in eine Verstauposition gebracht werden kann, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ kann sich die Spindelmutter 61 an dem Innenmantelrohr 33, und die Gewindespindel 62 an dem Außenmantelrohr 31 abstützen.

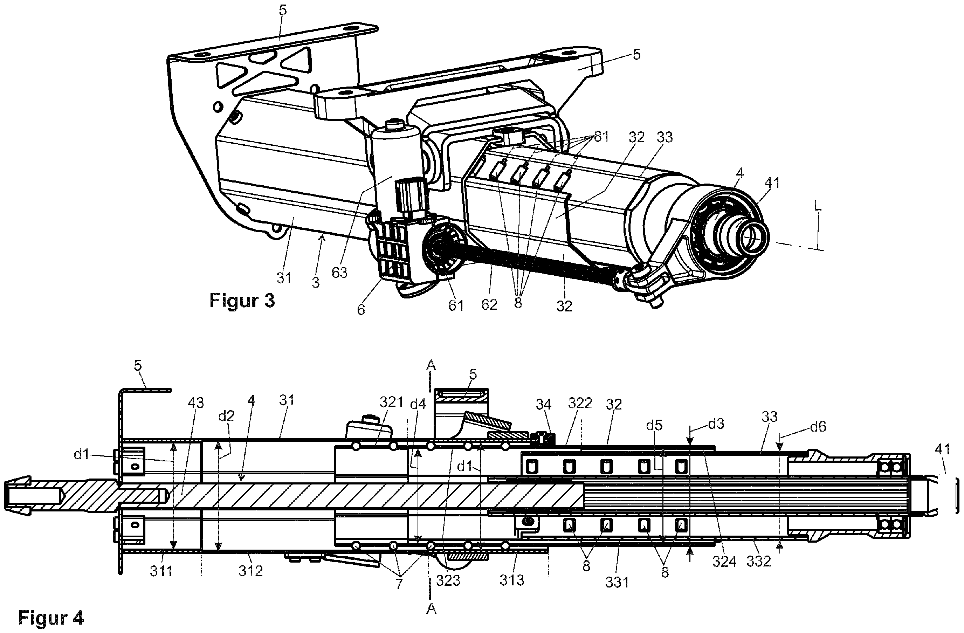

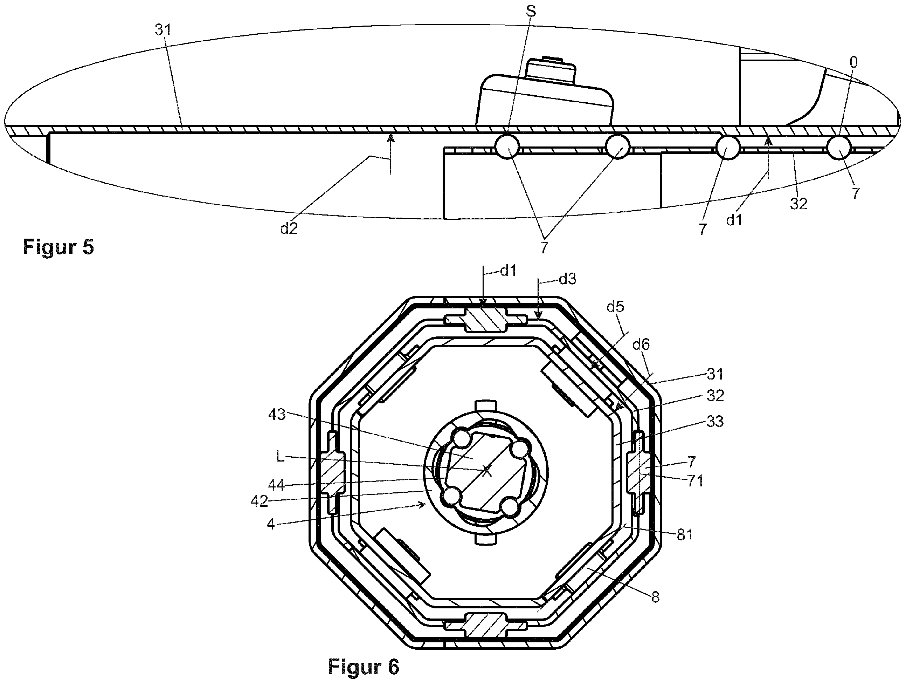

In Figur 2 ist in einer perspektivischen Ansicht von vorn das Außenmantelrohr 31 aufgeschnitten und teilweise weggelassen, so dass der Blick auf das Zwischenmantelrohr 32 freigegeben ist. In Figur 3 in einer Ansicht ähnlich wie in Figur 1 das Zwischenmantelrohr 32 aufgeschnitten dargestellt. Figur 4 zeigt einen Längsschnitt entlang der Längsachse L, und Figur 5 eine Detailansicht daraus. Figur 6 zeigt einen Querschnitt A-A gemäß Figur 4.

Die Mantelrohre 31, 32 und 33 haben einen achteckigen Profilquerschnitt, wie in Figur 6 erkennbar ist, die einen Querschnitt A-A gemäß Figur 4 durch die Manteleinheit 3 in teilweise ausgefahrenem Zustand zeigt, in dem das Innenmantelrohr 33 und das Zwischenmantelrohr 32 in das Außenmantelrohr 31 teilweise eingefahren sind. Daraus ist entnehmbar, dass die ersten Rollen 7 zwischen dem Außenmantelrohr 31 und dem Zwischenmantelrohr 32, und die zweiten Rollen 8 zwischen dem Zwischenmantelrohr 32 und dem Innenmantelrohr 33 angeordnet sind. Die Rollen 7 bzw. 8 sind dabei um ihre quer zur Längsachse L liegenden Rollenachsen 71 bzw. 81 den Mantelrohren 32 bzw. 33 drehbar gelagert. Die Rollen 7 stehen radial nach außen von dem Außenquerschnitt des Zwischenmantelrohrs 32 vor, so dass sie in Achsrichtung auf der Innenseite des Außenmantelrohrs 31 abrollbar sind, und analog stehen die Rollen 8 radial von dem Außenquerschnitt des Innenmantelrohrs 33 vor, so dass sie in Achsrichtung auf der Innenseite des Zwischenmantelrohrs 32 abrollbar sind. Die Rollen 7 und 8 sind jeweils in Reihen von jeweils fünf Rollen 7,8 in Achsrichtung auf jeder zweiten Seite des achteckigen Profils der Mantelrohre 32, 33 in einem Winkelversatz α von 360° / 8 = 45° angeordnet, die zwischen dem Zwischenmantelrohr 32 und dem Innenmantelrohr 33 in Umfangsrichtung auf Lücke versetzt angeordnet sind, wie deutlich in dem in Figur 6 gezeigten Querschnitt erkennbar ist.

Das Außenmantelrohr 31 weist im Bereich seines vorderen, karosserieseitigen Endes einen ersten inneren Lagerabschnitt 311 mit einer Innenweite d1 auf, an den sich in Achsrichtung nach hinten ein Führungsabschnitt 312 mit einer größeren Innenweite d2 anschließt, also gilt: d1<d2, an den sich an den sich in Achsrichtung nach hinten ein zweiter innerer Lagerabschnitt 313 mit der Innenweite d1 des ersten Lagerabschnitts 311 anschließt. Die jeweilige Innenweite ist der innere Abstand zwischen sich zwei parallel gegenüberliegenden flachen Abschnitten des achteckigen Profilquerschnitts, wobei auf diesen flachen Abschnitten die Rollen 7 abrollen. Sollten Mantelrohre 31, 32, 33 mit kreiszylindrischen Querschnitten zum Einsatz kommen, so ist die Innenweite des jeweiligen Abschnitts mit dem Innendurchmesser des jeweiligen Abschnitts identisch.

Über den Achsbereich der insgesamt jeweils fünf Rollen 7 ist an dem Zwischenmantelrohr 32 ein äußerer Lagerabschnitt 321 gebildet, der einen außen über die vorstehenden Rollen 7 gemessene Außenweite d1 hat, der also identisch ist mit der Innenweite d1 der inneren Lagerabschnitte 311 und 313. Dadurch sind die Rollen 7 spielfrei in den Lagerabschnitten 311 und 313 abrollbar. An den äußeren Lagerabschnitt 321 schließt sich in Achsrichtung nach hinten ein äußerer Führungsabschnitt 322 mit einer kleineren Außenweite d3 an, wobei d3<d1.

Im vorderen Endbereich weist das Zwischenmantelrohr 32 einen inneren Führungsabschnitt 323 mit einer Innenweite d4 auf, an den sich in Achsrichtung nach hinten ein innerer Lagerabschnitt 324 mit einer kleineren Innenweite d5 anschließt, also gilt: d4>d5.

Ähnlich wie das Zwischenmantelrohr 32 weist das Innenmantelrohr 33 einen durch die Reihe der insgesamt fünf Rollen 8 gebildeten äußeren Lagerabschnitt 331 auf, der eine über die nach außen vorstehenden Rollen 8 gemessene Außenweite d5 hat, die also der Innenweite d5 des inneren Lagerabschnitts 324 des Zwischenmantelrohrs 32 entspricht, so dass die Rollen 8 spielfrei abrollen können. An den äußeren Lagerabschnitt 331 schließt sich in Achsrichtung nach hinten ein äußerer Führungsabschnitt 332 mit einer kleineren Außenweite d6 an, wobei also d6<d5.

Die Rollen 7 des äußeren Lagerabschnitts 321 können innen in den inneren Lagerabschnitten 311 und 313 beim relativen Verstellen der Mantelrohre 31 und 32 spielfrei, mit Spiel = 0, in Achsrichtung abrollen. Dadurch wird die Teleskopverbindung spielfrei mit hoher Steifigkeit abgestützt, und im Sinne der Erfindung erfolgt eine Verstellung im Komfortbereich. Werden die Mantelrohre 31 und 32 zum Ein- oder Ausfahren in Längsrichtung relativ zueinander bewegt, haben die Rollen 7 im Führungsbereich 312 radiales Spiel S in Größe der Differenz (d2 - d1) zur Innenseite des Außenmantelrohrs 31. Dies ist in der Detaildarstellung von Figur 5 vergrößert dargestellt.

Analog dazu ist das Innenmantelrohr 33 in dem Zwischenmantelrohr 32 gelagert: Die Rollen 8 des äußeren Lagerabschnitts 331 können innen in dem inneren Lagerabschnitt 324 beim relativen Verstellen der Mantelrohre 32 und 33 spielfrei, mit Spiel = 0, in Achsrichtung abrollen. Dadurch wird die Teleskopverbindung spielfrei mit hoher Steifigkeit abgestützt, und im Sinne der Erfindung erfolgt eine Verstellung im Komfortbereich. Werden die Mantelrohre 32 und 33 zum Ein- oder Ausfahren in Längsrichtung relativ zueinander bewegt, haben die Rollen 8 im Führungsabschnitt 323 radiales Spiel S in Größe der Differenz (d4 - d5) zur Innenseite des Zwischenmantelrohrs 32. Dies ist in der Detaildarstellung von Figur 5 vergrößert mit den in Klemmern gesetzten Bezugszeichen angedeutet.

Der gesamte Verstellweg der Lenksäule 1 entspricht der Summe der Verstellungen in den Komfortbereichen und im Übergangsbereich. Durch das größere Spiel S muss zur Verstellung in Achsrichtung im Übergangsbereich eine geringere Reibungskraft überwunden werden als in den Komfortbereichen im Bedienbereich und im Bereich der Verstauposition. An dem Außenmantelrohr 31 ist am hinteren Ende ein Anschlag 34 angebracht, der am offenen Ende nach innen in den Zwischenraum zwischen Außenmantelrohr 31 und Zwischenmantelrohr 32 vorsteht. Beim Herausfahren schlägt das Zwischenmantelrohr 32 mit seinen Rollen 7 im äußeren Lagerabschnitt in Achsrichtung gegen den Anschlag 34 an, und ist gegen eine Trennung vom Außenmantelrohr 31 gesichert. Am hinteren Ende des Zwischenmantelrohrs 32 ist ein nach innen in den Zwischenraum zwischen Zwischenmantelrohr 32 und Innenmantelrohr 33 vorstehender Anschlag 35 angebracht, der das Innenmantelrohr 33 dadurch gegen Herausziehen aus dem Zwischenmantelrohr 32 sichert, dass die Rollen 7 in Achsrichtung anschlagen.

Die Lenkspindel 4 ist ebenfalls teleskopierbar ausgebildet, mit einer in eine Außenwelle 42 formschlüssig eingreifenden, in Längsrichtung teleskopierbaren Innenwelle 43, wobei dazwischen eine Führungshülse 44 zur Bildung einer leichtgängigen Gleitführung eingesetzt ist. Alternativ kann zwischen der Innenwelle 43 und der Außenwelle 42 eine lineare Wälzlagerführung vorgesehen sein.

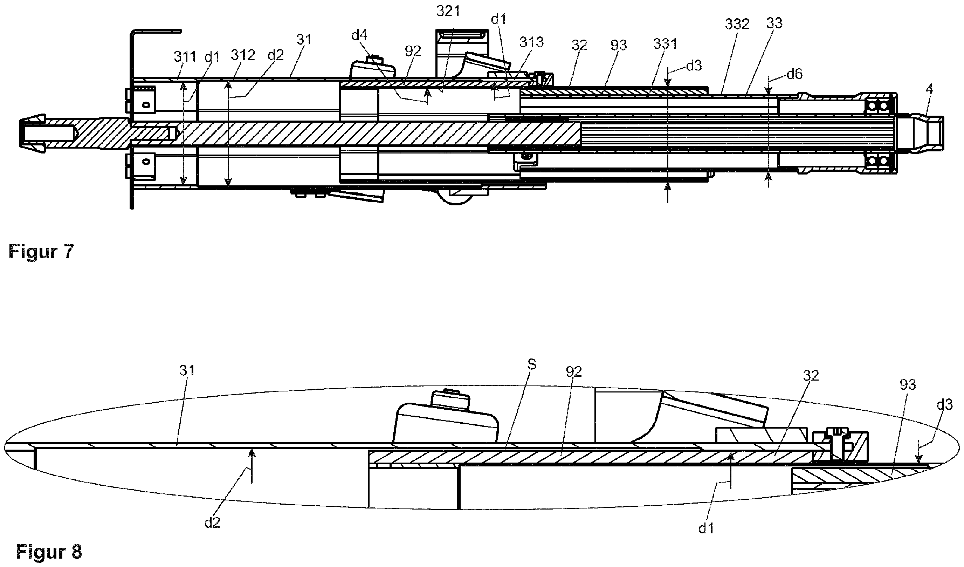

In den Figuren 7 bis 12 ist eine weitere Ausführung der Erfindung dargestellt, die anstelle der Rollen 7,8 rohrförmige Gleithülsen 92 und 93 aufweist. Die Gleithülse 92 ist zur Bildung eines äußeren Lagerabschnitts 321 hinten auf dem Zwischenmantelrohr 32 befestigt, wobei sie eine Außenweite von im Wesentlichen d1 hat, und ihre Länge in Achsrichtung in etwa der Länge der durch die fünf Rollen 7 auf dem Zwischenmantelrohr 32 gebildeten Reihe der ersten Ausführungsform entspricht. Entsprechend ist die weitere Gleithülse 93 zur Bildung eines äußeren Lagerabschnitts 331 hinten auf dem Innenmantelrohr 33 befestigt, wobei sie einen Außendurchmesser von etwa d5 hat, und ihre Länge in Achsrichtung der Länge der durch die fünf Rollen 7 auf dem Zwischenmantelrohr 32 gebildeten Reihe der ersten Ausführungsform entspricht.

In der vergrößerten Detaildarstellung von Figur 8, welche inhaltlich Figur 5 der ersten Ausführung entspricht, ist die Anordnung der Gleithülse 92 erkennbar, wobei die Anordnung zwischen den Mantelrohren 32 und 33 analog ist.

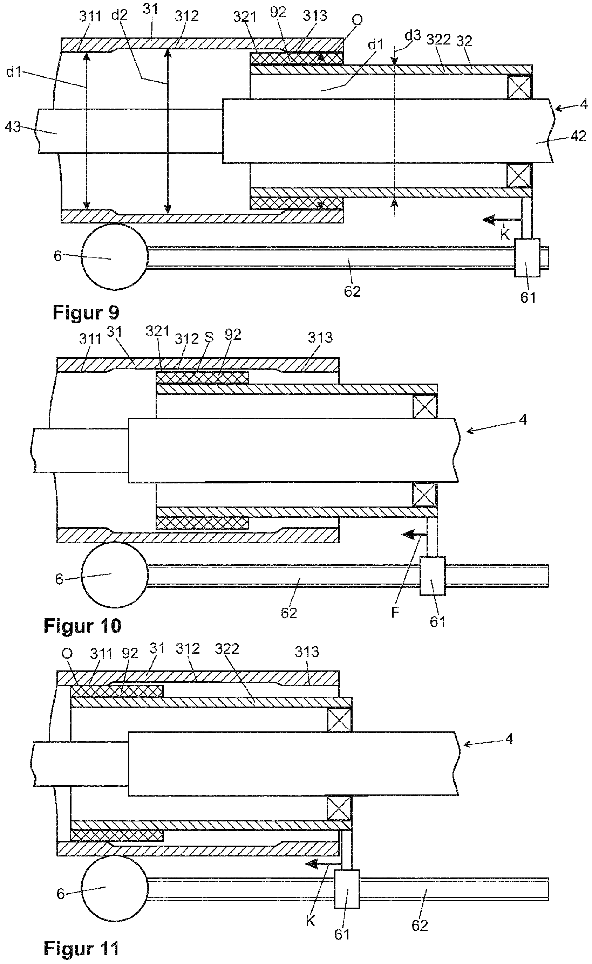

Figur 9 zeigt schematisch eine Lenksäule mit kreiszylindrischen Mantelrohren 31, 32 in einen Komfortbereich in ausgefahrenem Zustand, der dem Bedienbereich entspricht. Die Gleithülse 92 ist als äußerer Lagerabschnitt 321 mit dem als Außenweite ausgebildeten Außendurchmesser d1 in dem inneren Lagerabschnitt 311 des Außenmantelrohrs 31 spielarm bzw. spielfrei gelagert. Durch den Verstellantrieb 6 kann eine relative Verstellung in Achsrichtung zur Feineinstellung einer Lenkradposition erfolgen, wobei die dazu aufzuwendende Komfortverstellkraft K ist.

Figur 10 zeigt die Lenksäule in einem Übergangsbereich, in dem das Mantelrohr 32 aus dem Bedienbereich nach vorn, in der Zeichnung nach links, eingefahren ist. Die Gleithülse 92 und damit der äußere Lagerabschnitt 321 hat Abstand in Achsrichtung zum inneren Lagerabschnitt 313, und befindet sich im inneren Führungsabschnitt 312, wo es Spiel S = (d2 - d1) zur Innenwandung des Außenmantelrohrs 31 hat. Zum Einfahren ist aufgrund der durch das Spiel S verringerten Reibungskraft lediglich eine Übergangsverstellkraft F erforderlich ist, die kleiner ist als die Komfortverstellkraft K, wie mit dem Kraftpfeil angedeutet ist. F < K.

Sobald das die Gleithülse 93 beim weiteren Einfahren aus dem Führungssabschnitt 312 aus dem Führungsabschnitt 312 in den inneren Lagerabschnitt 311 eintritt, wie in Figur 11 gezeigt, wird der Komfortbereich der Verstauposition erreicht. Dort erfolgt wieder eine spielarme Lagerung wie im Lagerabschnitt 313. Dadurch, dass die Lagerabschnitte 311 und 313 im Beispiel denselben Innendurchmesser d1 haben, ist dort zum Verstellen wieder die Komfortverstellkraft K erforderlich. Es ist auch denkbar und möglich, dass der innere Lagerabschnitt 311 einen kleineren oder größeren Innendurchmesser hat, um dort die Komfortverstellkraft K größer oder kleiner vorzugeben.

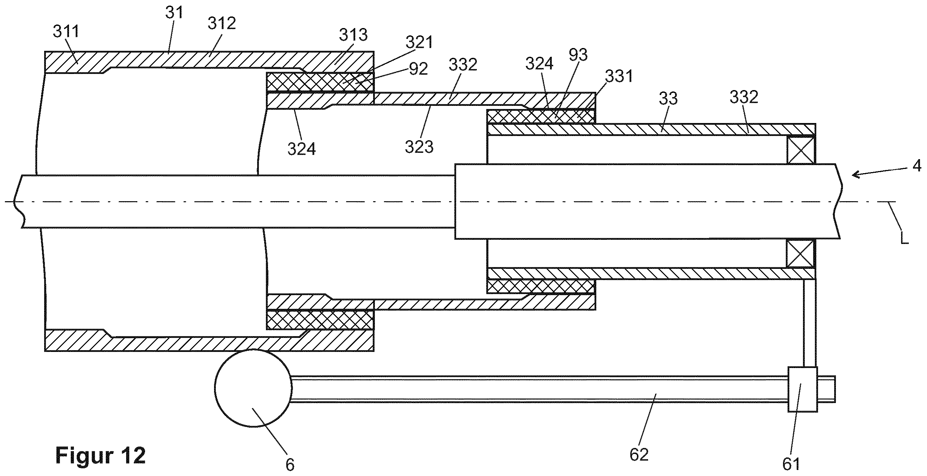

Figur 12 zeigt schematisch eine Mehrfach-Teleskopanordnung mit dem Mantelrohren 31, 32 und 33 und den Gleithülsen 92 und 93, die entsprechend der Figuren 9 bis 11 zusammenwirken.

Der gesamte Verstellweg der Lenksäule 1 umfasst die Verstellpositionen in den Komfortbereichen gemäß den Figuren 9 und 11 und im Übergangsbereich gemäß Figur 10, die beim vollständigen Ein- und Ausfahren durchfahren bzw. eingestellt werden können. Durch das größere Spiel S muss zur Verstellung in Achsrichtung im Übergangsbereich eine geringere Reibungskraft überwunden werden als in den Komfortbereichen im Bedienbereich und im Bereich der Verstauposition

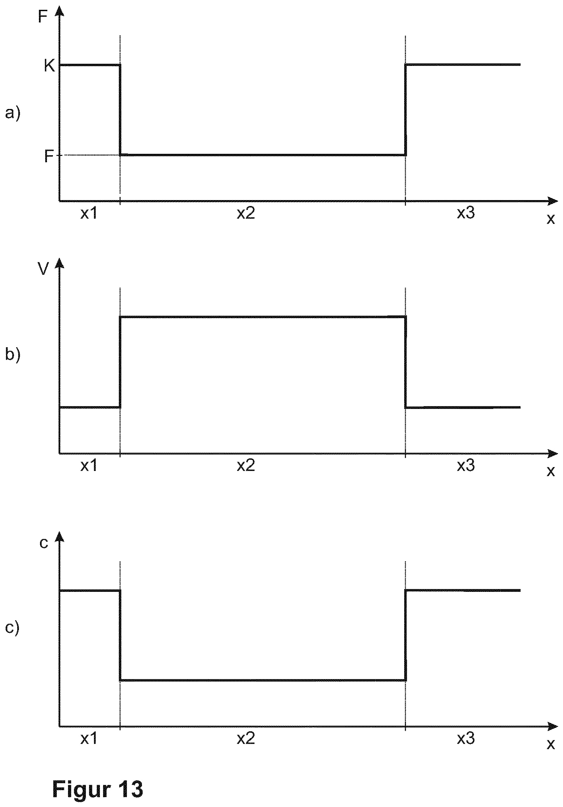

Figur 13 zeigt ein Diagramm, in dem in a) die Verstellkraft F, in b) die Verstellgeschwindigkeit v und in c) die Reibungskraft jeweils über den Verstellweg x dargestellt ist. Dabei entspricht x3 der Verstellung im Komfortbereich des Bedienbereichs in dem in Figur 11 gezeigten Verstellzustand, x2 der Verstellung im Übergangsbereich in dem in Figur 10 gezeigten Verstellzustand, und x1 der Verstellung im Komfortbereich der Verstauposition in dem in Figur 9 gezeigten Verstellzustand.

Aus Figur 13.a) ist klar erkennbar, wie die erforderliche Übergangsverstellkraft F bei der Verstellung zwischen den Komfortbereichen von der Komfortverstellkraft K auf die geringere Übergangsverstellkraft F abfällt. Als Konsequenz kann durch einen Verstellantrieb 6 mit gegebener Antriebsleistung im Übergangsbereich eine höhere Verstellgeschwindigkeit realisiert werden, wie in Figur 13.b) dargestellt. Die in Figur 13.c) dargestellte, zur Verstellung zu überwindende Reibungskraft c verhält sich analog zur Verstellkraft. Die radiale und vertikale Steifigkeit der Lenksäule verhält sich analog zu der in Figur 13.c) dargestellten Reibkraft.

Mittels eines zweiten Verstellantriebs 60, der als Spindeltrieb ähnlich wie der Verstellantrieb 6 ausgebildet sein kann, und der an der Stelleinheit 2 und der Trageinheit 5 angreift, kann die Manteleinheit 3 in der Höhenrichtung H verstellt werden.

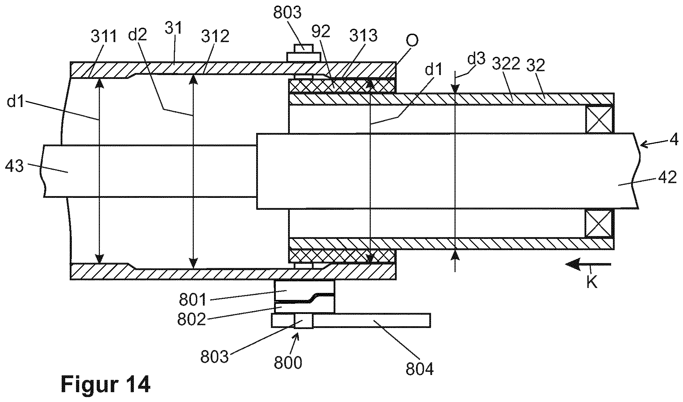

Figur 14 zeigt schematisch eine Lenksäule mit kreiszylindrischen Mantelrohren 31, 32 in einen Komfortbereich in ausgefahrenem Zustand, der dem Bedienbereich entspricht. Die Lenksäule ist als manuell verstellbare Lenksäule ausgebildet und weist eine Fixiereinrichtung 800 auf, die zwischen einer Freigabestellung, in der die Mantelrohre 31, 32 relativ zueinander verstellbar sind und wie dies in Figur 14 dargestellt ist, und einer Fixierstellung, in der die Mantelrohre zueinander festgelegt sind, umschaltbar sind. Die Fixiereinrichtung 800 weist einen Bedienhebel 804 auf, der mit einer als erste Hubscheibe ausgebildeten Nockenscheibe 802 drehfest verbunden ist, die mit einer als zweiten Hubscheibe ausgebildeten Kulissenscheibe 801 zusammenwirkt und gegenüber dieser mittels des Bedienhebels 804 verdrehbar ist zur Bereitstellung eines Klemmhubs in Richtung der Achse des Klemmbolzens 803, wodurch die Mantelrohre31, 32 zueinander festgesetzt werden (Fixierstellung).Somit kann mittels des Bedienhebels 804 die Fixiereinrichtung 800 durch die Verdrehung des Bedienhebels 804 zwischen der Freigabestellung, wie in Figur 14 dargestellt, und der Fixierstellung umgeschaltet werden. Die Gleithülse 92 ist als äußerer Lagerabschnitt 321 mit dem als Au-ßenweite ausgebildeten Außendurchmesser d1 in dem inneren Lagerabschnitt 311 des Außenmantelrohrs 31 spielarm bzw. spielfrei gelagert. Durch den Verstellantrieb 6 kann eine relative Verstellung in Achsrichtung zur Feineinstellung einer Lenkradposition erfolgen, wobei die dazu aufzuwendende Komfortverstellkraft K ist.

Die Fixiereinrichtung 800 kann in einer nicht dargestellten Ausführungsvariante zwischen den Hubscheiben Kippstifte oder Wälzkörper aufweisen.

### Bezugszeichenliste

- 1: Lenksäule
- 2: Stelleinheit
- 3: Manteleinheit
- 31: Außenmantelrohr
- 311,313: innere Lagerabschnitte von 31
- 312: innerer Führungsabschnitt von 31
- 32: Zwischenmantelrohr
- 321: äußerer Lagerabschnitt von 32
- 322: äußerer Führungsabschnitt von 32
- 323: innerer Führungsabschnitt von 32
- 324: innerer Lagerabschnitt von 32
- 33: Innenmantelrohr
- 331: äußerer Lagerabschnitt von 33
- 332: äußerer Führungsabschnitt von 33
- 34, 35: Anschlag
- 4: Lenkspindel
- 41: Anschlussabschnitt
- 42: Außenwelle
- 43: Innenwelle
- 44: Führungshülse
- 5: Trageinheit
- 51: Befestigungsmittel
- 6, 60: Verstellantrieb
- 61: Spindelmutter
- 62: Gewindespindel
- 63: Motor
- 7,8: Rollen
- 71,81: Rollenachsen
- 92, 93: Gleithülsen

- d1: Innendurchmesser von 311/ Außendurchmesser von 321
- d2: Innendurchmesser von 312
- d3: Außendurchmesser von 322
- d4: Innendurchmesser von 323
- d5: Innendurchmesser von 324 / Außendurchmesser von 331
- d6: Außendurchmesser von 332
- L: Längsachse
- S: Spiel
- K: Komfortverstellkraft
- F: Übergangsverstellkraft
- V: Verstellgeschwindigkeit
- C: Reibungskraft

## Patentansprüche

1. Lenksäule (1) für ein Kraftfahrzeug, umfassend eine Manteleinheit (3), in der eine Lenkspindel (4) um eine Längsachse (L) drehbar gelagert ist und die mindestens zwei in Richtung der Längsachse (L) um einen Verstellweg relativ zueinander verstellbar geführte Mantelrohre (31, 32, 33) aufweist,
wobei die Mantelrohre (31, 32, 33) entlang des Verstellwegs relativ zueinander in mindestens einen Komfortbereich und mindestens einen Übergangsbereich bringbar sind, wobei eine Übergangsverstellkraft (F) zur relativen Verstellung der Mantelrohre (31, 32, 33) im Übergangsbereich geringer ist als eine Komfortverstellkraft (K) zur relativen Verstellung der Mantelrohre (31, 32, 33) im Komfortbereich,
**dadurch gekennzeichnet,**
**dass** keine die Verstellkraft (F, K) erhöhenden oder verändernden Mittel vorgesehen sind, mit der die Komfortverstellkraft (K) und/oder die Übergangsverstellkraft (F) während der Verstelloperation anpassbar wäre.

2. Lenksäule nach Anspruch 1, **dadurch gekennzeichnet, dass** mindestens ein erster Komfortbereich im Bereich maximal ineinander eingefahrener Mantelrohre (31, 32, 33), und mindestens ein zweiter Komfortbereich im Bereich maximal auseinander ausgefahrener Mantelrohre (31, 32, 33) ausgebildet ist, wobei mindestens ein Übergangsbereich zwischen dem ersten und zweiten Komfortbereich ausgebildet ist.

3. Lenksäule nach Anspruch 1 oder 2, **dadurch gekennzeichnet, dass** in einem Übergangsbereich in größeres Spiel (S) zwischen den Mantelrohren (31, 32, 33) ausgebildet ist als in einem Komfortbereich.

4. Lenksäule nach einem der vorangehenden Ansprüche, **dadurch gekennzeichnet, dass** ein äußeres Mantelrohr (31, 32) einen inneren Lagerabschnitt (311, 313, 324) aufweist, der sich in Richtung der Längsachse (L) über einen Teil des Verstellwegs erstreckt, und einen inneren Führungsabschnitt (312, 323), der sich in Richtung der Längsachse (L) über einen Teil des Verstellwegs erstreckt und einen größeren Innenquerschnitt hat als der innere Lagerabschnitt, und ein in dem äußeren Mantelrohr (31, 32) aufgenommenes inneres Mantelrohr (32, 33) einen äußeren Lagerabschnitt (321, 331) aufweist, der sich in Richtung der Längsachse (L) über einen Teil des Verstellwegs erstreckt, und einen äußeren Führungsabschnitt (322, 332), der sich in Richtung der Längsachse (L) über einen Teil des Verstellwegs erstreckt und einen kleineren Außenquerschnitt hat als der äußere Lagerabschnitt (321, 331), wobei der äu-ßere Lagerabschnitt (321, 331) in dem inneren Lagerabschnitt (311, 313, 324) positionierbar ist.

5. Lenksäule nach einem der vorangehenden Ansprüche, **dadurch gekennzeichnet, dass** ein Mantelrohr (31, 32, 33) in seinen beiden Endabschnitten jeweils einen inneren und/oder äußeren Lagerabschnitt (321, 331) aufweist, zwischen denen sich ein innerer und/oder äußerer Führungsabschnitt (322, 332) erstreckt.

6. Lenksäule nach einem der vorangehenden Ansprüche, **dadurch gekennzeichnet, dass** an einem Mantelrohr (32, 33) ein in den Querschnitt zwischen den Mantelrohren vorstehendes Lagerelement (7, 8, 92, 93) ausgebildet ist.

7. Lenksäule nach Anspruch 6, **dadurch gekennzeichnet, dass** das Lagerelement ein Gleitelement (92, 93) aufweist, die mit einem Mantelrohr (32, 33) in Richtung der Längsachse (L) fest verbunden ist.

8. Lenksäule nach Anspruch 6, **dadurch gekennzeichnet, dass** das Lagerelement zumindest einen Rollkörper (7, 8) aufweist, der in einem Mantelrohr (32, 33) um eine Rollachse drehbar gelagert ist.

9. Lenksäule nach einem der vorangehenden Ansprüche, **dadurch gekennzeichnet, dass** die Mantelrohre (31, 32, 33) hohlzylindrisch mit einem kreiszylindrischen oder mehrkantigen Querschnitt ausgebildet sind.

10. Lenksäule nach einem der vorangehenden Ansprüche, **dadurch gekennzeichnet, dass** ein motorischer Verstellantrieb (6) vorgesehen ist, der derart mit den Mantelrohren (31, 32, 33) gekoppelt ist, um die Mantelrohre (31, 32, 33) relativ zueinander zu verstellen.

## Claims

1. A steering column (1) for a motor vehicle, comprising a casing unit (3), in which a steering spindle (4) is mounted rotatably about a longitudinal axis (L) and which has at least two casing tubes (31, 32, 33) which are guided adjustably relative to one another by an adjustment distance in the direction of the longitudinal axis (L),
wherein the casing tubes (31, 32, 33) can be brought along the adjustment distance relative to one another into at least one comfort region and at least one transition region, wherein a transition adjustment force (F) for the relative adjustment of the casing tubes (31, 32, 33) in the transition region is smaller than a comfort adjustment force (K) for the relative adjustment of the casing tubes (31, 32, 33) in the comfort region,
**characterized**
**in that** there are no means increasing or changing the adjustment force (F, K), with which the comfort adjustment force (K) and/or the transition adjustment force (F) can be adapted during the adjustment operation.

2. The steering column as claimed in claim 1, **characterized in that** at least one first comfort region is formed in the region where the casing tubes (31, 32, 33) are maximally retracted into one another, and at least one second comfort region is formed in the region where the casing tubes (31, 32, 33) are maximally extended out of one another, wherein at least one transition region is formed between the first and second comfort region.

3. The steering column as claimed in claim 1 or 2, **characterized in that** a greater play (S) between the casing tubes (31, 32, 33) is formed in a transition region than in a comfort region.

4. The steering column as claimed in one of the preceding claims, **characterized in that** an outer casing tube (31, 32) has an inner bearing portion (311, 313, 324), which extends in the direction of the longitudinal axis (L) over part of the adjustment distance, and an inner guide portion (312, 323), which extends in the direction of the longitudinal axis (L) over part of the adjustment distance and has a greater internal cross section than the inner bearing portion, and an inner casing tube (32, 33) which is received in the outer casing tube (31, 32) has an outer bearing portion (321, 331), which extends in the direction of the longitudinal axis (L) over part of the adjustment distance, and an outer guide portion (322, 332), which extends in the direction of the longitudinal axis (L) over part of the adjustment distance and has a smaller external cross section than the outer bearing portion (321, 331), wherein the outer bearing portion (321, 331) can be positioned in the inner bearing portion (311, 313, 324).

5. The steering column as claimed in one of the preceding claims, **characterized in that** a casing tube (31, 32, 33), in its two end portions, in each case has an inner and/or outer bearing portion (321, 331), between which an inner and/or outer guide portion (322, 332) extends.

6. The steering column as claimed in one of the preceding claims, **characterized in that** a bearing element (7, 8, 92, 93) protruding into the cross section between the casing tubes is formed on a casing tube (32, 33).

7. The steering column as claimed in claim 6, **characterized in that** the bearing element has a sliding element (92, 93), which is fixedly connected to a casing tube (32, 33) in the direction of the longitudinal axis (L).

8. The steering column as claimed in claim 6, **characterized in that** the bearing element has at least one rolling body (7, 8), which is mounted in a casing tube (32, 33) so as to be rotatable about a rolling axis.

9. The steering column as claimed in one of the preceding claims, **characterized in that** the casing tubes (31, 32, 33) are hollow-cylindrical with a circular-cylindrical or polygonal cross section.

10. The steering column as claimed in one of the preceding claims, **characterized in that** a motorized adjustment drive (6) is provided, which is coupled to the casing tubes (31, 32, 33) so as to adjust the casing tubes (31, 32, 33) relative to one another.

## Revendications

1. Colonne de direction (1) pour un véhicule automobile, comprenant une unité de boîtier (3), dans laquelle un axe de direction (4) est monté rotatif autour d'un axe longitudinal (L) et qui possède au moins deux tubes de boîtier (31, 32, 33) qui sont guidés de manière réglable l'un par rapport à l'autre sur une distance de réglage dans la direction de l'axe longitudinal (L), dans laquelle les tubes de boîtier (31, 32, 33) peuvent être amenés le long d'une distance de réglage l'un par rapport à l'autre dans au moins une zone de confort et au moins une zone de transition,
dans lequel les tubes d'enveloppe (31, 32, 33) peuvent être amenés l'un par rapport à l'autre le long de la distance de réglage dans au moins une zone de confort et au moins une zone de transition, dans laquelle une force de réglage de transition (F) pour le réglage relatif des tubes d'enveloppe (31, 32, 33) dans la zone de transition est plus petite qu'une force de réglage de confort (K) pour le réglage relatif des tubes d'enveloppe (31, 32, 33) dans la zone de confort,
**caractérisé**
**en ce qu'**il n'y a pas de moyens d'augmenter ou de modifier la force de réglage (F, K), avec lesquels la force de réglage de confort (K) et/ou la force de réglage de transition (F) peuvent être adaptées pendant l'opération de réglage.

2. Colonne de direction selon la revendication 1, **caractérisée par le fait qu'**au moins une première zone de confort est formée dans la zone où les tubes (31, 32, 33) sont rétractés au maximum l'un dans l'autre, et au moins une deuxième zone de confort est formée dans la zone où les tubes (31, 32, 33) sont déployés au maximum l'un hors de l'autre, dans laquelle au moins une zone de transition est formée entre la première et la deuxième zone de confort.

3. Colonne de direction selon la revendication 1 ou 2, **caractérisée par le fait qu'**un jeu (S) plus important entre les tubes (31, 32, 33) se forme dans une zone de transition que dans une zone de confort.

4. Colonne de direction selon l'une des revendications précédentes, **caractérisée par le fait qu'**un tube extérieur (31, 32) comporte une partie intérieure d'appui (311, 313, 324) qui s'étend dans la direction de l'axe longitudinal (L) sur une partie de la distance de réglage et une partie intérieure de guidage (312, 323) qui s'étend dans la direction de l'axe longitudinal (L) sur une partie de la distance de réglage et dont la section intérieure est supérieure à celle de la partie intérieure d'appui, et qu'un tube intérieur d'appui (32, 33) qui est reçu dans le tube de l'enveloppe extérieure (31, 32) a une partie de roulement extérieure (321, 331), qui s'étend dans la direction de l'axe longitudinal (L) sur une partie de la distance de réglage, et une partie de guidage extérieure (322, 332), qui s'étend dans la direction de l'axe longitudinal (L) sur une partie de la distance de réglage et a une section transversale externe plus petite que la partie de roulement extérieure (321, 331), dans laquelle la partie de roulement extérieure (321, 331) peut être positionnée dans la partie de roulement intérieure (311, 313, 324).

5. Colonne de direction selon l'une des revendications précédentes, **caractérisée en ce qu'**un tube de boîtier (31, 32, 33), dans ses deux parties d'extrémité, comporte dans chaque cas une partie d'appui intérieure et/ou extérieure (321, 331), entre laquelle s'étend une partie de guidage intérieure et/ou extérieure (322, 332).

6. Colonne de direction selon l'une des revendications précédentes, **caractérisée par le fait qu'**un élément d'appui (7, 8, 92, 93) faisant saillie dans la section transversale entre les tubes de boîtier est formé sur un tube de boîtier (32, 33).

7. Colonne de direction selon la revendication 6, **caractérisée par le fait que** l'élément de roulement comporte un élément coulissant (92, 93), qui est relié de manière fixe à un tube de boîtier (32, 33) dans la direction de l'axe longitudinal (L).

8. Colonne de direction selon la revendication 6, **caractérisée par le fait que** l'élément de roulement comporte au moins un corps roulant (7, 8), qui est monté dans un tube de boîtier (32, 33) de manière à pouvoir tourner autour d'un axe de roulement.

9. Colonne de direction selon l'une des revendications précédentes, **caractérisée par le fait que** les tubes du boîtier (31, 32, 33) sont creux-cylindriques avec une section transversale circulaire-cylindrique ou polygonale.

10. Colonne de direction selon l'une des revendications précédentes, **caractérisée par** la présence d'une commande de réglage motorisée (6) couplée aux tubes d'enveloppe (31, 32, 33) afin de régler les tubes d'enveloppe (31, 32, 33) l'un par rapport à l'autre.
